(19) Europäisches Patentamt / European Patent Office / Office européen des brevets

(11) **EP 2 147 201 B1**

# (12) FASCICULE DE BREVET EUROPEEN

(45) Date de publication et mention
de la délivrance du brevet:
**10.07.2013 Bulletin 2013/28**

(21) Numéro de dépôt: **08805779.9**

(22) Date de dépôt: **14.05.2008**

(51) Int Cl.:
*F01N 3/08* *(2006.01)*          *F01N 9/00* *(2006.01)*
*F01N 11/00* *(2006.01)*

(86) Numéro de dépôt international:
**PCT/FR2008/050831**

(87) Numéro de publication internationale:
**WO 2008/142346 (27.11.2008 Gazette 2008/48)**

(54) **PROCÉDÉ ET DISPOSITIF D'ESTIMATION PAR MODÈLE PHYSIQUE DE LA TEMPÉRATURE D'UN SYSTÈME DE POST TRAITEMENT DE GAZ D'ÉCHAPPEMENT**

VERFAHREN UND VORRICHTUNG ZUR SCHÄTZUNG DER TEMPERATUR EINES ABGASNACHBEHANDLUNGSSYSTEMS MITTELS EINES PHYSIKALISCHEN MODELLS

METHOD AND DEVICE FOR ESTIMATING THE TEMPERATURE OF AN EXHAUST GAS AFTER-TREATMENT SYSTEM BY MEANS OF A PHYSICAL MODEL

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **18.05.2007 FR 0755138**

(43) Date de publication de la demande:
**27.01.2010 Bulletin 2010/04**

(73) Titulaire: **Renault S.A.S.**
**92100 Boulogne-Billancourt (FR)**

(72) Inventeurs:
• **BARRILLON, Pascal**
**92130 Issy Les Moulineaux (FR)**
• **POILANE, Emmanuel**
**91290 Arpajon (FR)**

(56) Documents cités:
**DE-A1- 10 036 942      FR-A- 2 853 691**
**FR-A- 2 877 043**

**Description**

L'invention concerne le domaine de la dépollution diesel, et plus particulièrement, l'estimation des températures dans les systèmes de post traitement des gaz d'échappement lors des phases de régénération passives ou actives.

Les moteurs à combustion interne produisent des gaz d'échappement qui comprennent des substances polluantes, telles que des oxydes d'azote, des hydrocarbures imbrûlés, du monoxyde de carbone et des particules de suie. Les taux de rejet admis de ces différents polluants sont strictement règlementés et sujets à révisions périodiques à la baisse.

Pour abaisser les émissions de ces différents polluants, on utilise depuis de nombreuses années des systèmes de post traitement catalytique comprenant notamment des pièges catalytiques insérés dans la ligne d'échappement des moteurs à combustion interne à mélange pauvre. Ces éléments comprennent un matériau catalytique apte à stocker les polluants en fonctionnement normal. Lors de phases ponctuelles de régénération, ledit matériau catalytique permet de décomposer les différents polluants stockés en composés neutres pour la santé.

Pour obtenir une bonne efficacité du système de post traitement, une certaine température est nécessaire. Cette température est atteinte par l'augmentation de la chaleur déposée par le flux de gaz d'échappement traversant le système de post traitement, par l'énergie libérée lors de la décomposition des polluants et par l'utilisation de l'inertie thermique du système de post traitement.

Le système de post traitement peut également être pollué par les oxydes de soufre. La régénération par désulfatation requiert des températures supérieures aux températures de régénération des pièges catalytiques et sont proches des limites d'endommagement du système de post traitement. Le contrôle de la température du système de post traitement est ainsi crucial pour éviter un endommagement du système de post traitement. Une régulation de la température en sortie n'est pas suffisante pour contrôler les effets combinés de l'inertie thermique du système de post traitement, de la libération d'énergie thermique lors des réactions de régénération. Il est donc nécessaire de pouvoir estimer les températures du système de post traitement suivant les phénomènes d'échange thermique mis en jeu.

La demande de brevet FR 2 853 691 décrit une méthode de modélisation de la température d'un piège catalytique en fonction des paramètres de fonctionnement du moteur, de l'environnement du véhicule et du piège catalytique lui-même. Cependant cette méthode présente plusieurs inconvénients. D'une part, elle est limitée aux systèmes de traitement des oxydes d'azote. D'autre part, les calculs à réaliser et les paramètres à calibrer sont nombreux et complexes, nécessitant une forte puissance de calcul et une grande quantité de mémoire.

L'invention permet d'apporter une solution plus générale à l'estimation par un modèle physique des températures d'un système de post traitement. Notamment, la solution proposée n'est pas restreinte aux systèmes de traitement catalytique des oxydes d'azote, et nécessite une puissance de calcul et une quantité de mémoire moindres.

La présente invention a pour objet l'estimation des températures dans un système de post traitement pour des gaz d'échappement d'un moteur thermique.

L'invention a également pour objet la détermination de l'énergie dégagée lors du traitement catalytique des différents polluants lors de la régénération d'un système de post traitement.

Selon un aspect de l'invention, on définit un procédé d'estimation par modèle physique de la température d'un système de post traitement implanté dans la ligne d'échappement d'un moteur à combustion interne, comportant une modélisation du système de post traitement par une chaîne de réacteurs parfaitement agités connectés en série. Pour un réacteur courant de la chaîne, on procède au calcul de post traitement. Le contrôle de la température du système de post traitement est ainsi crucial pour éviter un endommagement du système de post traitement. Une régulation de la température en sortie n'est pas suffisante pour contrôler les effets combinés de l'inertie thermique du système de post traitement, de la libération d'énergie thermique lors des réactions de régénération. Il est donc nécessaire de pouvoir estimer les températures du système de post traitement suivant les phénomènes d'échange thermique mis en jeu.

La demande de brevet FR 2 853 691 décrit une méthode de modélisation de la température d'un piège catalytique en fonction des paramètres de fonctionnement du moteur, de l'environnement du véhicule et du piège catalytique lui-même. Cependant cette méthode présente plusieurs inconvénients. D'une part, elle est limitée aux systèmes de traitement des oxydes d'azote. D'autre part, les calculs à réaliser et les paramètres à calibrer sont nombreux et complexes, nécessitant une forte puissance de calcul et une grande quantité de mémoire.

Le document DE 100 36 942 décrit un procédé de détermination de la température d'un dispositif catalytique. Le dispositif catalytique est modélisé comme une succession de sections. La détermination est basée sur la prise en compte de la température et du débit des gaz en amont de la section de catalyseur.

L'invention permet d'apporter une solution plus générale à l'estimation par un modèle physique des températures d'un système de post traitement. Notamment, la solution proposée n'est pas restreinte aux systèmes de traitement catalytique des oxydes d'azote, et nécessite une puissance de calcul et une quantité de mémoire moindres.

La présente invention a pour objet l'estimation des températures dans un système de post traitement pour des gaz d'échappement d'un moteur thermique.

L'invention a également pour objet la détermination de l'énergie dégagée lors du traitement catalytique des différents polluants lors de la régénération d'un système de post traitement.

Selon un aspect de l'invention, on définit un procédé d'estimation par modèle physique de la température d'un système de post traitement implanté dans la ligne d'échappement d'un moteur à combustion interne, comportant une modélisation du système de post traitement par une chaîne de réacteurs parfaitement agités connectés en série. Pour un réacteur courant de la chaîne, on procède au calcul gazeuses des différentes émissions polluantes à partir d'une cartographie des émissions polluantes en fonction du motif d'injection, du couple, du régime et du mode de combustion du moteur à combustion interne.

Le moyen de détermination de l'énergie libérée lors de la régénération peut être capable de déterminer l'énergie totale libérée par les réactions de régénération, à partir de la nature et des concentrations gazeuses des différentes émissions polluantes.

Le dispositif peut également comprendre un moyen de calcul de la répartition de l'énergie libérée entre les différents réacteurs capable de déterminer la fraction de l'énergie totale libérée dans chaque réacteur en fonction de l'énergie totale libérée lors de la régénération.

Le dispositif peut en outre comprendre au moins un moyen de modélisation de la température de sortie d'un réacteur parfaitement agité capable, pour le réacteur courant, de déterminer la température des gaz en sortie du réacteur courant en fonction de l'énergie thermique portée par les gaz d'échappement, la fraction de l'énergie totale libérée à dissiper par le réacteur courant, et l'énergie thermique présente dans le système de post traitement, la température de sortie du réacteur courant étant la température d'entrée pour le réacteur suivant de la chaîne.

Le nombre de réacteurs peut être supérieur ou égal à trois et inférieur ou égal à dix.

Le nombre de réacteurs peut être inférieur ou égal à six.

Un système de post traitement peut comprendre un piège catalytique.

D'autres buts, caractéristiques et avantages de l'invention apparaîtront à la lecture de la description suivante, donnée uniquement a titre d'exemple non limitatif et faite en référence aux dessins annexés sur lesquels :

- la figure 1 illustre le dispositif de détermination de la température de sortie d'un système de post traitement des gaz d'échappement ; et
- la figure 2 illustre la discrétisation spatiale d'un système de post traitement en réacteurs parfaitement agités.

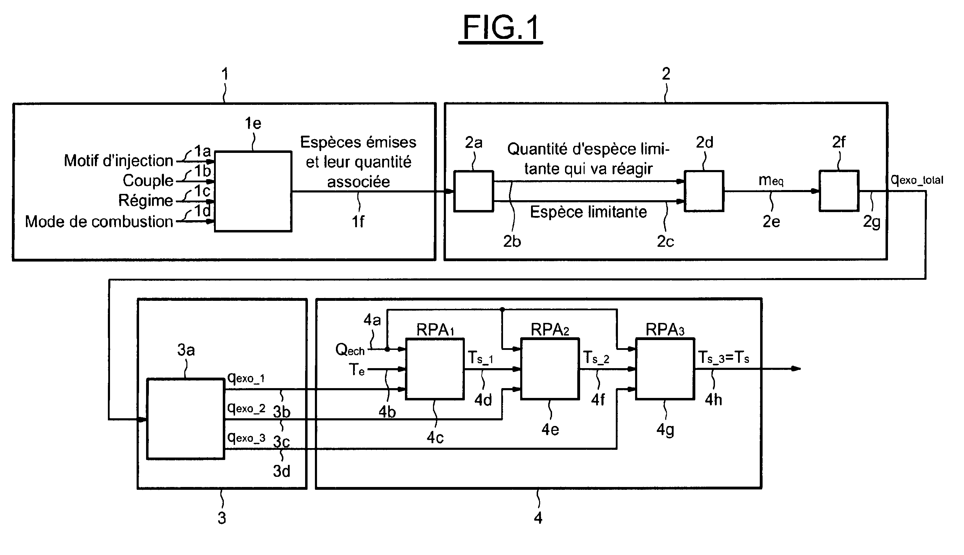

Le dispositif de détermination de la température, illustré sur la figure 1, comprend un moyen 1 d'estimation des émissions polluantes, un moyen 2 de détermination de l'énergie libérée lors de la régénération, un moyen 3 de calcul de la répartition de l'énergie libérée entre les différents réacteurs et un moyen 4 de détermination de la température de sortie des différents réacteurs.

Le moyen 1 d'estimation des émissions polluantes comprend une cartographie le des émissions polluantes en fonction de paramètres du moteur à combustion interne. La cartographie le des émissions polluantes reçoit sur ses entrées, le motif d'injection par la liaison 1a, le couple délivré par la liaison 1b, le régime moteur par la liaison 1c et le mode de combustion par la liaison 1d. Le mode de combustion représente un mode de fonctionnement particulier du moteur. On peut citer par exemple, un mode de régénération du filtre à particule ou un mode à mélange enrichi. Un mode de combustion peut comprendre une ou plusieurs phases requérant, par exemple, des quantités de carburant différentes, des nombres et des fréquences d'injections de carburant différentes. Ces paramètres forment un motif d'injection. La cartographie le des émissions polluantes peut prendre également en compte la quantité de carburant ou de réducteurs injectés dans la ligne d'échappement en aval du collecteur d'échappement. La cartographie 1c des émissions polluantes émet en sortie par la liaison 1f la nature et le taux d'émission des différentes espèces polluantes produites lors de la combustion.

Le moyen 2 de détermination de l'énergie libérée lors de la régénération comprend un moyen 2a de détermination des espèces limitantes, un moyen 2d de détermination de l'équivalent énergétique, et un moyen 2f de calcul de l'énergie totale libérée lors de la régénération. Le moyen 2a de détermination des espèces limitantes reçoit sur au moins une de ses entrées la nature et le taux d'émission de espèces polluantes par la liaison 1f provenant de la cartographie 1e des émissions polluantes.

Lors de la régénération, les réactions chimiques mettent en jeu des quantités déterminées de réactifs. Un ou plusieurs de ces réactifs peuvent ne pas être présents en quantité suffisante pour que tous les réactifs soient consommés. On qualifie d'espèce limitante les réactifs présents en quantité insuffisante par rapport aux autres espèces, compte tenu de la réaction chimique.

Le moyen 2a de détermination des espèces limitantes émet sur au moins une de ses sorties la nature de l'espèce limitante lors de la régénération par la liaison 2c et la quantité de cette espèce limitante qui va réagir par la liaison 2b. Les liaisons 2b et 2c sont reliées au moyen 2d. Le moyen 2d de détermination de l'équivalent énergétique émet sur au moins une de ses sorties, par la liaison 2e à destination du moyen 2f, la quantité équivalente d'espèce limitante correspondant aux quantités des différentes espèces qui vont réagir compte tenu de la quantité et de la nature de l'espèce limitante. Le moyen 2f de calcul de l'énergie totale libérée détermine l'énergie totale libérée lors de la régénération qexo_total et émet la valeur correspondante par au moins une de ses sorties à destination du moyen 3a par la liaison 2g.

A partir de ces données, le moyen 2 de détermination de l'énergie totale libérée lors de la régénération est donc capable de déterminer l'énergie totale libérée lors de la régénération qexo_total engendré par les réactions d'oxydation et de réduction des émissions polluantes lors de la régénération. Le moyen 2a de détermination des espèces limitantes détermine la nature de l'espèce limitante. La décomposition des espèces polluante lors de la régénération fait appel à des réactions chimiques dont la stoechiométrie est connue. Il est alors possible de déterminer les espèces sous-stoechiométriques. La connaissance des espèces sous-stoechiométriques permet également de déterminer la quantité de l'espèce limitante qui réagira.

En fonction des données reçues, le moyen 2d de détermination de l'équivalent énergétique détermine le mode de fonctionnement courant et la quantité des différentes espèces qui vont réagir. Selon la teneur des différentes émissions polluantes, plusieurs modes de fonctionnement existent. Soit l'oxygène n'est pas l'espèce limitante, et le mode de fonctionnement est dit mode pauvre. Soit l'oxygène est l'espèce limitante, et le mode de fonctionnement est dit mode riche. Le moyen 2d de détermination estime alors une masse de l'espèce limitante dont la régénération libèrera une quantité d'énergie comparable à la quantité d'énergie libérée lors de la régénération des différentes espèces qui vont réagir. La masse d'espèce limitante ainsi déterminée est appelée masse équivalente. Le moyen 2d émet la valeur de la masse équivalente vers le moyen 2f de calcul de l'énergie totale libérée.

Le moyen 2f de calcul de l'énergie totale libérée comprend une zone mémoire comprenant les chaleurs de réaction des différents polluants pouvant être émis par le moteur à combustion interne. Selon la nature de l'espèce limitante reçue du moyen 2d, le moyen 2f détermine l'énergie totale libérée qexo_total.

L'énergie totale libérée lors de la régénération qexo_total est calculée en multipliant la masse équivalente $m_{eq}$ par la chaleur de réaction de l'espèce limitante PCI.

$$qexo\_total = m_{eq} * PCI$$

Ainsi, selon le mode de fonctionnement, par exemple en mode pauvre ou en mode riche, seule la valeur de PCI change, une seule constante est mémorisée, limitant l'espace mémoire nécessaire.

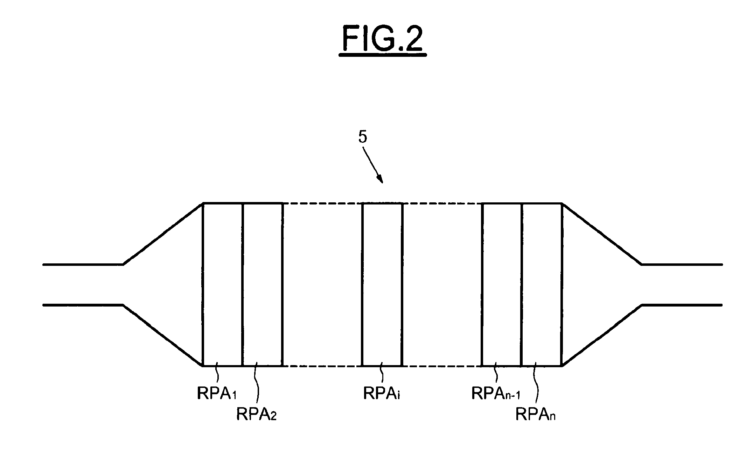

Afin de modéliser les températures dans le système de post traitement 5, on procède à une discrétisation spatiale sous la forme d'une succession de réacteurs parfaitement agités comme on peut le voir sur la figure 2. Sur la figure 2, les réacteurs parfaitement agités sont notés RPAI à RPAn. Un réacteur courant est numéroté RPAi. Les réacteurs sont disposés en série, la température de sortie d'un réacteur étant la température d'entrée du réacteur suivant. On modélise généralement un système de post traitement 5 avec moins d'une dizaine de réacteurs parfaitement agités, de préférence de 3 à 6 réacteurs. Il est à noter que ce nombre n'est dépendant que de la puissance de calcul qui peut être investie dans la modélisation. Par la suite, le cas de trois réacteurs parfaitement agités a été choisi à titre d'exemple. Le système de post traitement 5 décrit ici comprend les pièges catalytiques.

Il est à noter que le moyen de calcul du moyen 2 de détermination de l'énergie libérée lors de la régénération est également capable de prendre en compte les rendements des réactions chimique, notamment le cas où les volumes de gaz sont trop faibles pour obtenir une réaction optimale.

Le moyen 3 de calcul de la répartition de l'énergie libérée entre les différents réacteurs comprend un moyen 3a de répartition de l'énergie totale libérée dans le système de post traitement 5. Le moyen 3a de répartition de l'énergie totale libérée dans le système de post traitement 5 reçoit en entrée la quantité d'énergie totale libérée qexo_total par la connexion 2g. Le moyen 3a de répartition de l'énergie totale libérée dans le système de post traitement émet par ses sorties les fractions de l'énergie totale libérée. Les fractions de l'énergie totale libérée correspondent à la répartition de l'énergie totale entre les différents réacteurs parfaitement agites. La fraction de la quantité d'énergie totale libérée qexo_total correspondant au premier réacteur est notée qexo_1. Les fractions qexo_2 et qexo_3 correspondent respectivement au deuxième et au troisième réacteurs. La répartition de l'énergie totale libérée lors de la régénération est déterminée empiriquement. La répartition de l'énergie totale libérée correspond à une valeur qexo_1 égale à 80% de qexo_total, une valeur qexo_2 égale à 20% de qexo_total et une valeur de qexo_3 égale à 0% de qexo_total. La répartition est donnée ici à titre d'exemple, d'autres répartitions seraient possibles. Un nombre différent de réacteurs pourrait également être pris en compte.

Le moyen 4 de détermination de la température de sortie des différents réacteurs comprend un moyen de modélisation pour chaque réacteur parfaitement agité. Dans l'exemple illustré sur la figure 1, la modélisation du réacteur RPA1 est assurée par un moyen de modélisation 4c, la modélisation du réacteur RPA2 par un moyen de modélisation 4e et la modélisation du réacteur RPA3 par un moyen de modélisation 4g.

Le moyen de modélisation 4c du réacteur parfaitement agité RPA1 reçoit en entrée le débit massique des gaz d'échappement Qech par la liaison 4a, la température des gaz en entrée Te du réacteur parfaitement agité RPA1 par la liaison 4b et la fraction de l'énergie totale libérée qexo_1 à dissiper dans le réacteur parfaitement agité RPA1 par la liaison 3b. Le débit massique des gaz d'échappement Qech et la température Te sont déterminés par un moyen d'estimation non représenté. Le moyen de modélisation 4c émet en sortie par la liaison 4d, la valeur de la température en sortie Ts_1 du réacteur parfaitement agité RPA1. La même description s'applique aux deux autres réacteurs.

Le moyen de modélisation 4e du réacteur parfaitement agité RPA2 reçoit en entrée le débit des gaz d'échappement Qech par une dérivation de la liaison 4a, la température des gaz Ts_1 en sortie du réacteur parfaitement agité RPA1 par la liaison 4d et la fraction de l'énergie totale libérée qexo_2 à dissiper dans le réacteur parfaitement agité RPA2 par la liaison 3c. Le moyen 4e émet en sortie par la liaison 4f, la valeur de la température en sortie Ts_2 du réacteur parfaitement agité RPA2.

Le moyen de modélisation 4g du réacteur parfaitement agité RPA3 reçoit en entrée le débit des gaz d'échappement Qech par une dérivation de la liaison 4a, la température des gaz Ts_2 en sortie du réacteur parfaitement agité RPA2 par la liaison 4f et la fraction de l'énergie totale libérée qexo_3 à dissiper dans le réacteur parfaitement agité RPA3 par la liaison 3d. Le moyen 4g émet en sortie par la liaison 4h, la valeur de la température en sortie Ts_3 du réacteur parfaitement agité RPA3.

Pour calculer la température de sortie Ts_i d'un réacteur parfaitement agité courant RPAi, le moyen de modélisation réalise d'abord le bilan de l'énergie thermique dans le réacteur.

$$Ts\_i(t) = \frac{T_{cata}(t-1) \cdot m \cdot Cp_{cata} + Te(t) \cdot Qech(t) \cdot Cp_{gaz} \cdot dt + q_{exo\_i}(t) \cdot dt}{m \cdot Cp_{cata} + Qech(t) \cdot Cp_{gaz} \cdot dt} \quad (1)$$

Avec

$T_{cata}$ = Température du système de post traitement
Te= Température des gaz en entrée du réacteur courant RPAi
m= Masse de système de post traitement dans le réacteur courant RPAi
Qech= Débit massique des gaz d'échappement
$Cp_{gaz}$= Capacité calorifique massique à pression constante des gaz d'échappement
$Cp_{cata}$= Capacité calorifique massique à pression constante du système de post traitement
$q_{exo-i}$= Fraction de l'énergie totale libérée à dissiper sur le réacteur courant RPAi

Les différents termes de l'équation (1) peuvent être identifiés de la façon suivante. Le terme $T_{cata}(t-1) \cdot m \cdot Cp_{cata}$ est l'énergie emmagasinée dans le système de post traitement lors de l'itération précédente. Le terme $Te(t) \cdot Qech(t) \cdot Cp_{gaz} \cdot dt$ est la quantité de chaleur véhiculée par les gaz d'échappement. Le terme $q_{exo-i}(t) \cdot dt$ est la quantité de chaleur dégagée lors de la régénération dans le réacteur courant RPAi, qexo_i étant la fraction de l'énergie totale libérée qexo_total à dissiper dans le réacteur parfaitement agité courant RPAi. Enfin, le terme $m \cdot Cp_{cata} + Qech(t) \cdot Cp_{gaz} \cdot dt$ est la capacité calorifique d'un réacteur courant RPAi, c'est-à-dire la somme du terme $m \cdot Cp_{cata}$ représentant la capacité calorifique du système de post traitement 5 et du terme $Q_{ech}(t) \cdot Cp_{gaz} \cdot dt$ représentant la capacité calorifique des gaz d'échappement contenus dans le réacteur courant RPAi.

La température de sortie Ts_i d'un réacteur courant RPAi est la température d'entrée Te i+1 d'un réacteur RPAi+1 suivant le réacteur courant. Le premier réacteur de la série RPA1 utilise comme température d'entrée Te, la température des gaz en entrée du système de post traitement. Le dernier réacteur de la série permet d'obtenir la température de sortie Ts du système de post traitement 5.

Alternativement, la température de sortie Ts du système de post traitement 5 peut être déterminée en prenant en compte les pertes thermiques du système de post traitement 5. On ajoute alors le terme de pertes suivant :

$$T_{ext} \cdot S_{ext} \cdot H_{ext}(v_{veh}) \cdot dt$$

avec

$H_{ext}(v_{veh})$ = un facteur de convection externe
$v_{veh}$ = la vitesse du véhicule
$Text$ = la température extérieure

*Sext* = la surface de contact avec l'extérieur

Dans ce cas, l'équation (1) permettant de déterminer la température du système devient :

$$Ts(t) = \frac{T_{cata}(t-1) \cdot m \cdot Cp_{cata} + Te(t) \cdot Qech(t) \cdot Cp_{gaz} \cdot dt + T_{ext} \cdot S_{ext} \cdot H_{ext}(v_{veh}) \cdot dt + q_{exo}(t) \cdot dt}{m \cdot Cp_{cata} + Qech(t) \cdot Cp_{gaz} \cdot dt + S_{ext} \cdot H_{ext}(v_{veh}) \cdot dt}$$

Le dispositif tel qu'il a été décrit permet d'estimer l'état thermique d'un système de post traitement à régénération active ou passive implanté dans la ligne d'échappement d'un moteur à combustion interne. On peut en déduire la température de sortie du système de post traitement de différents polluants afin de pouvoir commander avec précision les paramètres de fonctionnement du moteur à combustion interne.

On peut ainsi améliorer la quantité de polluants stockés dans les systèmes de post traitement et déterminer les variations de température des systèmes de post traitement lors des étapes de régénération en anticipant l'inertie du système de post traitement.

## Revendications

1. Procédé d'estimation par modèle physique de la température d'un système de post traitement (5) implanté dans la ligne d'échappement d'un moteur à combustion interne, comportant une modélisation du système de post traitement (5) par une chaîne de réacteurs parfaitement agités connectés en série, **caractérisé par le fait que** pour un réacteur courant de la chaîne, on procède au calcul de la température de sortie du réacteur courant, à partir au moins de la température et du débit massique des gaz en amont du réacteur courant, et de la fraction de l'énergie totale libérée lors de la régénération à dissiper sur ledit réacteur courant,
on détermine l'énergie totale libérée lors de la régénération du système de post traitement (5), à partir de la connaissance des concentrations des espèces polluantes, et
on détermine la fraction de l'énergie totale libérée lors de la régénération à dissiper sur le réacteur courant en fonction de l'énergie totale libérée lors de la régénération et d'une cartographie de répartition mémorisée.

2. Procédé selon la revendication 1, dans lequel, pour le réacteur courant, on détermine la température des gaz en sortie du réacteur courant en fonction du bilan thermique entre les gaz et le substrat, ledit bilan thermique comprenant l'énergie thermique portée par les gaz d'échappement, la fraction de l'énergie totale libérée à dissiper, et l'énergie thermique présente dans le système de post traitement (5), la température de sortie du réacteur courant étant la température d'entrée pour le réacteur suivant dans la chaîne.

3. Dispositif d'estimation de la température des gaz en sortie d'un système de post traitement (5) implanté dans la ligne d'échappement d'un moteur à combustion interne d'un véhicule, comprenant un moyen de détermination du débit massique des gaz d'échappement, un moyen de détermination de la température en amont du système de post traitement (5), et un moyen (4) de détermination de la température de sortie modélisant le système de post traitement (5) en une chaîne de réacteurs parfaitement agités reliés en série **caractérisé par le fait que** le moyen (4) de détermination de la température de sortie est capable de déterminer la température de sortie du système de post traitement (5), à partir des informations provenant du moyen de détermination du débit massique des gaz d'échappement et du moyen de détermination de la température en amont du système de post traitement (5),
le dispositif d'estimation comprenant un moyen (2) de détermination de l'énergie libérée lors de la régénération est capable de déterminer l'énergie totale libérée par les réactions de régénération, à partir de la nature et des concentrations gazeuses des différentes émissions polluantes,
le dispositif d'estimation comprenant également un moyen (3) de calcul de la répartition de l'énergie libérée entre les différents réacteurs capable de déterminer la fraction de l'énergie totale libérée dans chaque réacteur en fonction de l'énergie totale libérée lors de la régénération et d'une cartographie de répartition mémorisée.

4. Dispositif selon la revendication 3 comprenant un moyen d'estimation (1) des émissions polluantes et une cartographie (1e) des émissions polluantes, le moyen d'estimation (1) des émissions polluantes est capable de déterminer les concentration gazeuses des différentes émissions polluantes à partir de la cartographie (1e) des émissions polluantes, du motif d'injection, du couple, du régime et du mode de combustion du moteur à combustion interne.

5. Dispositif selon l'une quelconque des revendications 3 ou 4, dans lequel un moyen (4) de détermination de la température de sortie d'un réacteur parfaitement agité est capable, pour le réacteur courant, de déterminer la température des gaz en sortie du réacteur courant en fonction de l'énergie thermique portée par les gaz d'échappement, la fraction de l'énergie totale libérée à dissiper par le réacteur courant, et l'énergie thermique présente dans le système de post traitement, la température de sortie du réacteur courant étant la température d'entrée pour le réacteur suivant de la chaîne.

**6.** Dispositif selon l'une des revendications 3 à 5, dans lequel le nombre de réacteurs est supérieur ou égal à trois et inférieur ou égal à dix.

**7.** Dispositif selon l'une des revendications 3 à 5, dans lequel le nombre de réacteurs est inférieur ou égal à six.

**8.** Dispositif selon l'une des revendications 3 à 7, dans lequel un système de post traitement (5) comprend un piège catalytique.

**Patentansprüche**

**1.** Verfahren zur Schätzung der Temperatur eines Abgasnachbehandlungssystems (5) mittels eines physikalischen Modells, das in der Auspuffleitung eines Verbrennungsmotors angebracht ist, umfassend eine Modellierung des Nachbehandlungssystems (5) durch eine Kette aus perfekt durchmischten, in Reihe geschalteten Reaktoren, **dadurch gekennzeichnet, dass** für einen Durchflussreaktor der Kette die Berechnung der Temperatur am Auslass des Durchflussreaktors aus mindestens der Temperatur und dem Massendurchfluss der Gase stromaufwärts des Durchflussreaktors und des Anteils an Gesamtenergie, die während der Regeneration zur Ableitung auf dem Durchflussreaktor freigesetzt wird, durchgeführt wird,
die Gesamtenergie, die während der Regeneration des Nachbehandlungssystems (5) freigesetzt wird, ausgehend von der Kenntnis der Schadstoffspezieskonzentrationen bestimmt wird, und
der Anteil an Gesamtenergie, die während der Regeneration zur Ableitung auf dem Durchflussreaktor freigesetzt wird, in Abhängigkeit von der Gesamtenergie, die während der Regeneration freigesetzt wird und einem gespeicherten Kennfeld bestimmt wird.

**2.** Verfahren nach Anspruch 1, wobei für den Durchflussreaktor die Temperatur der Gase am Auslass des Durchflussreaktors in Abhängigkeit von der Wärmebilanz zwischen den Gasen und dem Substrat bestimmt wird, wobei die Wärmebilanz die Wärmeenergie, die von den Abgasen getragen wird, den Anteil an Gesamtenergie, der zur Ableitung freigesetzt wird, und die Wärmeenergie umfasst, die in dem Nachbehandlungssystem (5) vorhanden ist, wobei die Temperatur am Auslass des Durchflussreaktors die Temperatur am Einlass des in der Kette folgenden Reaktors ist.

**3.** Vorrichtung zur Schätzung der Temperatur der Gase am Auslass eines Nachbehandlungssystems (5), das in der Auspuffleitung eines Verbrennungsmotors eines Fahrzeugs angebracht ist, umfassend ein Mittel zur Bestimmung des Massendurchflusses der Abgase, ein Mittel zur Bestimmung der Temperatur stromaufwärts des Nachbehandlungssystems (5) und ein Mittel (4) zur Bestimmung der Temperatur am Auslass, die das Nachbehandlungssystem (5) in einer Kette aus in Reihe geschalteten, perfekt durchströmten Reaktoren modellieren, **dadurch gekennzeichnet, dass** das Mittel (4) zur Bestimmung der Temperatur am Auslass befähigt ist, die Temperatur am Auslass des Nachbehandlungssystems (5) aus Informationen zu bestimmen, die von dem Mittel zur Bestimmung des Massendurchflusses der Abgase und dem Mittel zur Bestimmung der Temperatur stromaufwärts des Nachbehandlungssystems (5) stammen,
wobei die Vorrichtung zur Schätzung, die ein Mittel (2) zur Bestimmung der Energie umfasst, die während der Regeneration freigesetzt wird, befähigt ist, die Gesamtenergie, die durch die Regenerationsreaktionen freigesetzt wird, aus der Art und den Gaskonzentrationen der verschiedenen Schadstoffemissionen zu bestimmen,
wobei die Vorrichtung zur Schätzung, die ein Mittel (3) zur Berechnung der Verteilung der freigesetzten Energie zwischen den verschiedenen Reaktoren umfasst, befähigt ist, den Anteil an Gesamtenergie, der in jedem Reaktor freigesetzt wird in Abhängigkeit von der Gesamtenergie, die während der Regeneration freigesetzt wird und einem gespeicherten Kennfeld zu bestimmen.

**4.** Vorrichtung nach Anspruch 3, umfassend ein Mittel zur Schätzung (1) der Schadstoffemissionen und ein Kennfeld (1e) der Schadstoffemissionen, wobei das Mittel zur Schätzung (1) der Schadstoffemissionen befähigt ist, die Gaskonzentrationen der verschiedenen Schadstoffemissionen aus dem Kennfeld (1e) der Schadstoffemissionen, dem Einspritzmuster, dem Drehmoment, der Drehzahl und dem Verbrennungsmodus des Verbrennungsmotors zu bestimmen.

5. Vorrichtung nach einem der Ansprüche 3 oder 4, wobei ein Mittel (4) zur Bestimmung der Temperatur am Auslass eines perfekt durchmischten Durchflussreaktors befähigt ist, für den Durchflussreaktor die Gastemperatur am Auslass des Durchflussreaktors in Abhängigkeit von der Wärmeenergie, die von den Abgasen getragen wird, dem Anteil an der Gesamtenergie, die beim Ableiten durch den Durchflussreaktor freigesetzt wird und der Wärmeenergie, die in dem Nachbehandlungssystem vorhanden ist, zu bestimmen, wobei die Temperatur am Auslass des Durchflussreaktors die Temperatur am Einlass des in der Kette folgenden Reaktors ist.

6. Vorrichtung nach einem der Ansprüche 3 bis 5, wobei die Anzahl an Reaktoren größer oder gleich drei und kleiner oder gleich zehn ist.

7. Vorrichtung nach einem der Ansprüche 3 bis 5, wobei die Anzahl an Reaktoren kleiner oder gleich sechs ist.

8. Vorrichtung nach einem der Ansprüche 3 bis 7, wobei ein Nachbehandlungssystem (5) einen Speicherkatalysator umfasst.


## Claims

1. Method for estimating, by a physical model, the temperature of an after-treatment system (5) located in the exhaust line of an internal combustion engine, comprising a modelling of the after-treatment system (5) by a chain of perfectly agitated reactors connected in series, **characterized in that**, for a current reactor of the chain, the output temperature of the current reactor is calculated, from at least the temperature and the mass flow of the gases upstream of the current reactor, and from the fraction of the total energy released during the regeneration to be dissipated on said current reactor,
the total energy released during the regeneration of the after-treatment system (5) is determined, from the knowledge of the concentrations of the polluting species, and
the fraction of the total energy released during the regeneration to be dissipated on the current reactor is determined as a function of the total energy released during the regeneration and of a stored distribution mapping.

2. Method according to Claim 1, in which, for the current reactor, the temperature of the gases at the output of the current reactor is determined as a function of the heat balance between the gases and the substrate, said heat balance comprising the thermal energy borne by the exhaust gases, the fraction of the total energy released to be dissipated, and the thermal energy present in the after-treatment system (5), the output temperature of the current reactor being the input temperature for the next reactor in the chain.

3. Device for estimating the temperature of the gases at the output of an after-treatment system (5) located in the exhaust line of an internal combustion engine of a vehicle, comprising a means for determining the mass flow of the exhaust gases, a means for determining the temperature upstream of the after-treatment system (5), and a means (4) for determining the output temperature modelling the after-treatment system (5) as a chain of perfectly agitated reactors linked in series, **characterized in that** the means (4) for determining the output temperature is capable of determining the output temperature of the after-treatment system (5), from the information originating from the means for determining the mass flow of the exhaust gases and from the means for determining the temperature upstream of the after-treatment system (5),
the estimation device comprising a means (2) for determining the energy released during the regeneration is capable of determining the total energy released by the regeneration reactions, from the nature and the gaseous concentrations of the different polluting emissions,
the estimation device also comprising a means (3) for calculating the distribution of the energy released between the different reactors capable of determining the fraction of the total energy released in each reactor as a function of the total energy released during the regeneration and of a stored distribution mapping.

4. Device according to Claim 3 comprising a means (1) for estimating polluting emissions and a mapping (Ie) of the polluting emissions, the means (1) for estimating the polluting emissions is capable of determining the gaseous concentrations of the different polluting emissions from the mapping (Ie) of the polluting emissions, from the injection pattern, from the torque, from the speed and from the combustion mode of the internal combustion engine.

5. Device according to any of one of Claims 3 or 4, in which a means (4) for determining the output temperature of a perfectly agitated reactor is capable, for the current reactor, of determining the temperature of the gases at the output of the current reactor as a function of the thermal energy borne by the exhaust gases, the fraction of the total energy released to be dissipated by the current reactor, and the thermal energy present in the after-treatment system, the output temperature of the current reactor being the input temperature for the next reactor of the chain.

6. Device according to one of Claims 3 to 5, in which the number of reactors is greater than or equal to three and less than or equal to ten.

7. Device according to one of Claims 3 to 5, in which the number of reactors is less than or equal to six.

8. Device according to one of Claims 3 to 7, in which an after-treatment system (5) comprises a catalytic trap.

# FIG.1

EP 2 147 201 B1

FIG.2

**RÉFÉRENCES CITÉES DANS LA DESCRIPTION**

**Documents brevets cités dans la description**

- FR 2853691

- DE 10036942